Europäisches Patentamt

**European Patent Office**

Office européen des brevets

(19)

(11) Publication number: **0 007 815**
**B1**

(12) # EUROPEAN PATENT SPECIFICATION

(45) Date of publication of patent specification: **21.10.87**

(21) Application number: **79301547.0**

(22) Date of filing: **01.08.79**

(51) Int. Cl.⁴: **C 08 L 23/32,** C 08 J 3/08,
C 09 D 3/733, B 01 J 19/06

(54) **Process of well control by means of gel formation.**

(30) Priority: **01.08.78 US 930044**

(43) Date of publication of application:
**06.02.80 Bulletin 80/03**

(45) Publication of the grant of the patent:
**21.10.87 Bulletin 87/43**

(84) Designated Contracting States:
**BE DE FR GB IT NL**

(56) References cited:
**EP-A-0 002 345**
**EP-A-0 002 350**
**US-A-3 931 021**

(73) Proprietor: **Exxon Research and Engineering Company**
**P.O.Box 390 180 Park Avenue**
**Florham Park New Jersey 07932 (US)**

(72) Inventor: **Lundberg, Robert D.**
**4 Brian Drive**
**Bridgewater, New Jersey (US)**
Inventor: **O'Brien, Dennis E.**
**639 Cherrybark Lane**
**Houston, Texas (US)**
Inventor: **Makowski, Henry S.**
**2045 Winding Brook Way**
**Scotch Plains, New Jersey (US)**
Inventor: **Klein, Robert R.**
**40 Fern Place**
**Berkeley Heights, New Jersey (US)**

(74) Representative: **Pitkin, Robert Wilfred et al**
**ESSO Engineering (Europe) Ltd. Patents & Licences Apex Tower High Street**
**New Malden Surrey KT3 4DJ (GB)**

Courier Press, Leamington Spa, England.

## Description

The present invention concerns a process of well control by means of gel formation.

The process of present invention involves, in general terms, steps which permit (1) the preparation of polymer solutions of sulfonated polymers in organic liquid having reasonably low viscosities (i.e. less than 20,000 mPa · s), and (2) the preparation of extremely viscous solutions or gels from such solutions by the simple process of mixing water with the polymer solution. These operations are achieved by the use of the appropriate concentration of polymers having low concentrations of ionic groups present, preferably metal sulfonate groups. Such polymers are described in detail in a number of US Patents (US 3,836,511; 3,870,841; 3,847,854; 3,624,728; 3,931,021).

These polymers possess unusual solution characteristics some of which are described in U.S. Patent 3,931,021. Specifically such polymers such as lightly sulfonated polystyrene containing 2 mole % sodium sulfonate pendant to the aromatic groups are typically not soluble in solvents commonly employed for polystyrene itself. However, the incorporation of modest levels of polar cosolvents permit the rapid dissolution of such ionic polymers to form homogeneous solutions of moderate viscosity.

In the present process, the role of the polar cosolvent is that of solvating the ionic groups while the main body of the solvent interacts with the polymer backbone. For example, xylene is an excellent solvent for the polystyrene backbone and when combined with 5% methanol readily and rapidly will dissolve the previously described lightly sulfonated polystyrene.

The process of this invention may be employed as an integral part of well control procedures which are initiated when unwanted pore fluid influxes have entered the wellbore from subterranean formations. A thin fluid solution, separated from the water based drilling mud by suitable fluid spacers, can be circulated down the drill pipe string and out through the jet nozzles in the drill bit. Upon contacting water in the drill pipe-formation annulus, a viscous gel is formed that prevents further pore fluid movement and avoids the risk of a catastrophic well blowout. This type of procedure has several advantages over current, conventional well control methods which rely on the hydrostatic gradient of a heavy fluid placed in the annulus to control the well in the event of pore fluid influxes.

According to the present invention a process for well control comprises (a) forming a solvent system of an organic liquid and a polar cosolvent, said organic liquid being an aromatic hydrocarbon, an aliphatic hydrocarbon, a chlorinated aliphatic hydrocarbon, a ketone, a cyclic aliphatic ether, an aliphatic ether, an aliphatic ester, a paraffin oil or a mixture thereof, said polar cosolvent having a solubility parameter of at least 10.0 and being a water soluble alcohol, amine, di- or tri- functional alcohol, amide, phosphate, a lactone, an acetamide or a mixture thereof, said polar cosolvent being less than about 15 wt.% of said solvent system, the viscosity of said solvent system being less than about 1000 mPa · s (1,000 cps); (b) dissolving a neutralized sulfonated polymer in said solvent system to form a solution, the concentration of said neutralised sulfonated polymer in said solution being 0.5 to 5 wt.%, the viscosity of said solution being less than 2000 mPa · s (20,000 cps), the polymer having a backbone which has a solubility parameter of less than 10.5, the polymer having a level of crystallinity of less than 25% and the sulphonated polymer having been neutralised with cations of Groups IA, IB, IIA or IIB of the Periodic Table of Elements, or lead, tin, antimony or ammonium or amine cations. Thereafter the solution thus formed is introduced into a well bore, the solution being separated from the water based drilling mud by fluid spacers and the solution is allowed to contact water in the drill pipe formation annulus so that there is 5 to 500 volume % water based on the volume of organic liquids plus polar cosolvent, said water being immiscible with said solution. This results in the polar cosolvent transferring from said solution to said water causing the viscosity of said solution or suspension to increase from less than 20000 mPa · s (20,000 cps) to form a gel which thereby prevents further pore fluid movement.

When the solution having a high viscosity is formed by the addition of water to the solution having a viscosity less than 20000 mPa · s (20,000 cps), the polar cosolvent rapidly transfers from the solution or gel phase to the aqueous water which is immiscible with the solution phase. The water can be removed from the solution phase by conventional liquid extraction methods. The formation of the solution having a higher viscosity of for example 50000 mPa · s (50,000 cps) from the solution having a viscosity less than 20000 mPa · s (20,000 cps) can be quite rapid e.g. of the order of less than 1 minute to about 24 hours, more usually less than 1 minute to about 30 minutes, and most usually less than 1 minute to about 10 minutes; however, this depends on temperature, shear, solvent type, etc.

The component materials of the present process include a neutralized sulfonated polymer, an organic liquid, a polar cosolvent and water.

In general, the sulphonated polymer comprises from 10 to 200 meq. pendant sulphonate groups per 100 grams of polymer, more preferably from 10 to 100 meq. pendant sulphonate groups. The polymers utilized in the present invention have sulphonic acid groups which have been neutralized with basic materials selected from Groups IA, IIA, IB and IIB of the Periodic Table of the Elements, lead, tin and antimony, as well as ammonium and amine counterions. Sulphonated polymers which are subject to the process of the invention are unlimited and include both plastic and elastomeric polymers. Specific polymers include sulfonated polystyrene, sulfonated t-butyl styrene, sulfonated ethylene copolymers, sulfonated propylene copolymers, sulfonated styrene/acrylonitrile copolymers, sulfonated styrene/methyl methacrylate copolymers, sulfonated block copolymers of styrene/ethylene oxide, sulfonated polyisobutylene, sulfonated ethylene-propylene terpolymers, sulfonated polyisoprene, sulfonated elastomers and their copolymers, sulfonated polyvinyl toluene and sulfonated polyvinyl toluene copolymers.

Neutralization of the cited polymers with appropriate metal hydroxides, metal acetates, metal oxides or ammonium hydroxide etc. can be conducted by means well known in the art. For example, the sulfonation process as with butyl rubber containing a small 0.3 to 1.0 mole % unsaturation can be conducted in a suitable solvent such as toluene with acetyl sulfate as the sulfonating agent such as described in U.S. Patent No. 3,836,511. The resulting sulfonate derivative can then be neutralized with a number of different neutralization agents such as sodium phenolate and similar metal salts. The amounts of such neutralization agents employed will normally be equal stoichiometrically to the amount of unneutralized sulfonate in the polymer plus any unreacted reagent which still is present. It is preferred that the amount of neutralizing agent be equal to the molar amount of sulfonating agent originally employed plus 10% more to ensure full neutralization. The use of more of such neutralization agent is not critical. Sufficient neutralization agent is necessary to effect at least 50% neutralization of the sulfonate groups present in the polymer, preferably at least 90% and most preferably essentially complete neutralization of such sulfonate groups should be effected.

The degree of neutralization of said ionomeric groups may vary from 50 to 500 mole % preferably 90 to 200%. Most preferably it is preferred that the degree of neutralization be substantially complete, that is with no substantial free acid present and without substantial excess of the base other than that needed to ensure neutralization. Thus, it is clear that the polymers which are utilized in the present invention comprise substantially neutralized pendant groups and, in fact, an excess of the neutralizing material may be utilized without defeating the objects of the present invention.

The ionomeric polymers of the present invention may vary in number average molecular weight from 1,000 to 10,000,000, preferably from 5,000 to 500,000, most preferably from 10,000 to 200,000. These polymers may be prepared by methods known in the art: for example, see U.S. Patent No. 3,642,728.

It is evident that the polymers covered within this invention encompass a broad class of hydrocarbon polymer systems. It is important that these hydrocarbon polymer backbones (in the absence of the ionic groups) be soluble in the organic liquid, the viscosity of which is to be controlled. To achieve the desired solubility, it is required that the polymer to be employed possess a degree of polarity consistent with that solvent. This solubility relationship can readily be established by anyone skilled in the art simply by appropriate tests (e.g., Polymer Handbook, Edited by Brandup and Emmergut, Interscience Publishers, 1967, section IV-341). In the absence of appropriate polymer-solvent compatibility knowledge, this can be determined experimentally by observing whether the selected polymer will be soluble in the solvent at a level of 1 gm. Polymer per 100 ml solvent. If the polymer is soluble, then this demonstrates that it is an appropriate backbone for modification with ionic groups to achieve the objectives of this invention. It is also apparent that polymers which are too polar will not be soluble in the relatively nonpolar organic liquids of this invention. Therefore, only those polymer backbones (i.e., as measured in the absence of ionic groups) having a solubility parameter less than 10.5 are suitable in this invention. This precludes the use of such polymers as polyvinyl alcohol, polyacrylonitrile, etc. Also highly crystalline polymers are to be avoided since they tend not to be soluble in the relatively nonpolar organic liquids employed herein. Therefore, acceptable polymers employed in this invention must possess a level of crystallinity of less than 25%. Thus, these acceptable polymers can be considered substantially noncrystalline.

The preferred ionic copolymers for use in the present invention, e.g., sulfonated polystyrene and substituted derivatives thereof, may be prepared by the procedures described in U.S. Patent No. 3,870,841.

The sulphonated polymers are incorporated into the organic liquid at a level of from 0.5 to 5 weight % based on the organic liquid and the polar cosolvent.

The sulphonated polymers of the present invention may be prepared prior to incorporation into the organic solvent or by neutralization of the unneutralized sulfonate in situ. For example, preferably the unneutralized sulfonate is neutralized immediately after preparation. For example, if the sulfonation of polystyrene is conducted in solution, then the neutralization of that unneutralized sulfonate can be conducted immediately following the sulfonation procedure. The neutralized polymer may then be isolated by means well known to those skilled in the art: i.e., coagulation, steam stripping, or solvent evaporation, because the neutralized polymer has sufficient thermal stability to be dried for employment at a later time in the process of the present invention. It is well known that the unneutralized sulfonate derivatives do not possess good thermal stability and the above operations avoid that problem.

It is also possible to neutralize the unneutralized sulfonate of these polymers in situ: however, this is not a preferred operation, since in situ neutralization required preparation of the unneutralized sulfonate in the organic liquid which is to be subjected to the present process, or the unneutralized sulfonate of the polymer must be dissolved in said organic liquid. The latter approach may involve handling of the unneutralized sulfonate of a polymer which has limited thermal stability. Therefore, it is quite apparent that the preparation and isolation of a neutralized sulphonated polymer affords the maximum latitude in formulation, less problems in handling polymers of limited thermal stability and maximum control over the final mixture of sulphonated polymer, polar cosolvent and organic liquid.

The organic liquids, which may be utilized in the present invention, are selected with relation to the sulphonated polymer and vice-versa. The organic liquid is an aromatic hydrocarbon, ketone, chlorinated

**0 007 815**

aliphatic hydrocarbon, aliphatic hydrocarbon, cyclic aliphatic ether, aliphatic ether, aliphatic ester or a mixture thereof.

Specific examples of organic liquids to be employed with various types of polymers are:

| Polymer | Organic liquid |
|---|---|
| Sulfonated polystyrene | benzene, toluene, ethyl benzene, methylethyl ketone, xylene, styrene, ethylene dichloride, methylene chloride |
| sulfonated poly-t-butyl-styrene | benzene, toluene, xylene, ethyl benzene, styrene, t-butyl styrene, aliphatic oils, aromatic oils, hexane, heptane, decane, nonane, pentane |
| sulfonated ethylene-propylene terpolymer | aliphatic and aromatic solvents, oils such as Solvent "100 Neutral", "150 Neutral" and similar oils, benzene, diesel oil, toluene, xylene, ethyl benzene, pentane, hexane, heptane, octane, iso-octane, nonane, decane, aromatic solvents, ketone solvents |
| sulfonated styrene-methyl-methacrylate copolymer | dioxane, halogenated aliphatics, e.g., methylene chloride, tetrahydrofuran |
| sulfonated polyisobutylene' | saturated aliphatic hydrobons, diisobutylene, triisobutylene, aromatic and alkyl substituted aromatic hydrocarbons, chlorinated hydrocarbons, n-butyl ether, n-amyl ether, methyl oleate, aliphatic oils, oils predominantly paraffinic in nature and mixtures containing naphthenic hydrocarbons "Solvent 100 Neutral", "Solvent 150 Neutral" and all related oils, low molecular weight polymeric oils such as squarlene, white oils and process oils having 60% or less aromatic content |
| sulfonated polyvinyl toluene | tolyene, benzene, xylene, cyclohexane, ethyl benzene, styrene, methylene, chloride ethylene dichloride. |

The method of the present invention includes incorporating a polar cosolvent into the mixture of organic liquid and ionomer, to solubilize the pendant ionomeric groups. The polar cosolvent will have a solubility parameter of at least 10.0, more preferably at least 11.0 and is water miscible. The solvent system of polar cosolvent and organic liquid in which the neutralized sulfonated polymer is dissolved contains less than 15 wt.% of the polar cosolvent, more preferably 2 to 10 wt.%, and most preferably 2 to 5 wt.%. The viscosity of the solvent system is less than 1000 mPa · s (1,000 cps), more preferably less than 800 mPa · s (800 cps) and most preferably less than 500 mPa · s (500 cps).

Normally, the polar cosolvent will be a liquid at room temperature; however, this is not a requirement. It is preferred but not required that the polar cosolvent be soluble or miscible with the organic liquid at the

4

levels employed in this invention. The polar cosolvent is a water soluble alcohol, amine, di- or trifunctional alcohol, amide, acetamide, phosphate, lactone or a mixture thereof. Especially preferred polar cosolvents are aliphatic alcohols such as methanol, ethanol, n-propanol, isopropanol, 1,2-propane diol, monomethyl ether of ethylene glycol, and n-ethylformamide.

The amount of water contacting the solution of neutralized sulfonated polymer, organic liquid and polar cosolvent having a viscosity of less than 20000 mPa · s (20,000 cps), is 5 to 500 vol.% of water, more preferably 10 to 300 vol.% water and most preferably 10 to 200 vol.% water based on the volume of organic liquid plus polar cosolvent.

Example

Solutions were prepared at 5% (5 gms/100 ml) concentrations of 2 mole % sodium sulfonated polystyrene (S-PS) in 5% methanol/xylene (vol/vol) and 5% hexanol/xylene, and of sulfonated EPDM (about 1.0 mole % zinc sulfonate) in 5% isopropanol/heptane and 5% methanol/xylene.

To 50 ml samples of each solution, varying percentage levels of water (by volume) were added while stirring rapidly with a high speed stirrer. Brookfield viscosities of the stock solutions and each sample after water addition were obtained at 25°C.

Viscosity data are summarized on Table 1 for the S-PS solutions: Table 2 for the sulfo-EPDM solutions.

S-PS

The addition of water to S-PS in methanol/xylene produces a milky solution or gel. Viscosity increases exponentially from about 8 cps for the stock solution to 384 Pa · s (384,000 cps) with 14% water added. Beyond this level of water addition, *solid gels* were obtained with viscosities above the range of the Brookfield measuring capability. Excess water was seen to separate from the thickened solutions at water levels of 10% and above.

The solution viscosity of the S-PS in hexanol/xylene stock solution was considerably higher 458 mPa · s (458 cps) than the methanol/xylene solution. The addition of 1 and 2% water resulted in milky solutions with slight increases in viscosity (612 mPa · s) (612 cps at 2% water level). At a level of 14% water, viscosity was increased to only 914 mPa · s (914 cps). This experiment clearly demonstrates that the use of a water immiscible alcohol such as hexanol does not provide a gel as shown above with methanol.

Sulphonated EPDM

The solution of Sulphonated EPDM isopropanol/heptane displayed phase separation upon standing into two indistinct layers which made viscosity readings somewhat erratic. The addition of water followed by agitation permitted reproducible readings over a range of water levels. This solution, therefore, was examined by removing 50 ml samples, adding aliquots of water and stirring vigorously. At water addition levels of 6 to 12%, uniform solutions resulted and viscosities were obtained. At levels of 14% water and above, gelation became too thick for viscosity measurements.

The solution of Sulphonated EPDM in methanol/xylene was examined as above. Water was added to 50 ml samples at levels of 6, 8, 10 and 12%. Milky, thick solutions were obtained up to the 10% water level and viscosities obtained. At a level of 12% water solid gelation occurs.

The preceding experiments demonstrate conclusively that the process envisaged for these sulphonated polymers in mixed solvents is useful in preparing gels. It is also evident that this process is applicable to a number of different polymer backbones containing pendant metal sulfonate groups. For example, copolymers of butadiene or isoprene with metal sulfonate containing vinyl monomers would also be useful in this invention. The preferred level of metal sulfonate groups pendant to the polymer backbone is in the range of 10 meq./100 gm up to 200 meq./100 gm of polymer. Similarly, the alcohol level varies from below 2 percent to less than 15 weight percent based on total solvent (hydrocarbon solvent and alcohol).

It has generally been observed that increasing the amount of water with the polymer solution increases the strength of the gel. Levels of water in excess of 50 volume percent have been employed successfully and higher levels can be employed. The preferred levels of water are not believed to be critical provided that levels of greater than 5 volume percent are employed (based on volume of hydrocarbon-alcohol solution).

In addition, to the variables delineated above, other additives can be employed to increase gel strength, if desired. For example, the addition of clays, fillers (calcium carbonate, zinc oxide), carbon black and the like can be employed to strengthen the gels.

The experiments described heretofore are concerned only with the preparation of a gel and not its reversion. It has been observed that the gels of the present invention can be dispersed simply by the addition of a polar cosolvent which is miscible with the hydrocarbon phase and immiscible with water. Thus, a gel formed from sulfonated polystyrene [5% of S-PS containing 2 mole % sodium sulfonate in methanol/xylene (95/5)] by mixing with about 40 vol.% water is a stiff gel. The addition of about 5 volume percent of hexanol-1 to the entire mixture followed by agitation provides a fluid emulsion of very low viscosity. This reverse process can be effected with those alcohols and polar cosolvents which are *not* water miscible and, therefore, are primarily dissolved in the hydrocarbon phase.

## TABLE 1
### Viscosities of sulfo-polystyrene solutions* at various water contents with methanol and hexanol as cosolvents

| Alcohol | 0% $H_2O$ | | 1% $H_2O$ | | 2% $H_2O$ | | 4% $H_2O$ | | 6% $H_2O$ | |
|---|---|---|---|---|---|---|---|---|---|---|
| | RPM | Vis-UL | RPM | Vis-UL | RPM | Vis-No. 2 | RPM | Vis-No. 2 | RPM | Vis-No. 4 |
| Methanol | 60 | 7.7 | 12 | 40.6 | 60 | 403 | 1.5 | 10,360 | 12 | 33,350 |
| | 30 | 7.4 | 6 | 39.4 | 30 | 402 | .6 | 9,900 | 6 | 33,000 |
| | 12 | 6.5 | 3 | 39.4 | 12 | 350 | .3 | 10,000 | 3 | 32,000 |
| | RPM | Vis-No. 2 | RPM | Vis-No. 2 | RPM | Vis-No. 2 | RPM | Vis-No. 2 | RPM | Vis-No. 2 |
| Hexanol | 12 | 458 | 30 | 570 | 30 | 612 | 30 | 654 | 30 | 705 |
| | 6 | 460 | 12 | 570 | 12 | 600 | 12 | 655 | 12 | 705 |
| | 3 | 464 | 6 | 570 | 6 | 590 | 6 | 660 | 6 | 690 |

### TABLE 1 Continued:

| Alcohol | 8% $H_2O$ | | 10% $H_2O$ | | 12% $H_2O$ | | 14% $H_2O$ | |
|---|---|---|---|---|---|---|---|---|
| | RPM | Vis-No. 4 | RPM | Vis-No. 4 | RPM | Vis-No. 4 | RPM | Vis-No. 4 |
| Methanol | 6 | 90,200 | 1.5 | 338,800 | 1.5 | 284,000 | 1.5 | 384,000 |
| | 3 | 91,400 | .6 | 335,000 | .6 | 278,000 | .6 | 386,000 |
| | 1.5 | 84,000 | .3 | 340,000 | .3 | 260,000 | .3 | 380,000 |
| | RPM | Vis-No. 2 | RPM | Vis-No. 2 | RPM | Vis-No. 2 | RPM | Vis-No. 2 |
| Hexanol | 30 | 738 | 30 | 774 | 30 | 860 | 30 | 914 |
| | 12 | 735 | 12 | 775 | 12 | 860 | 12 | 915 |
| | 6 | 690 | 6 | 750 | 6 | 840 | 6 | 890 |

*95% xylene/5% alcohol (v/v) containing 5% by weight of sulfonated polystyrene (2 mole percent sodium sulfonate) was employed at starting solution.

TABLE 2
Viscosities of sulfonated ethylene/propylene diene terpolymer
solutions* at various water contents in two solvents systems

| Alcohol/solvent | 0% H$_2$O | | 6% H$_2$O | |
|---|---|---|---|---|
| | RPM | Vis-No. 4 | RPM | Vis-No. 4 |
| Isopropanol/heptane | 60 | Erratic Readings | 60 | 3,200 |
| | 3 | | 30 | 3,600 |
| | | | 12 | 5,500 |
| | RPM | Vis-UL | RPM | Vis-No. 4 |
| Methanol/xylene | 30 | 116 | 12 | 32,000 |
| | 12 | 123 | 6 | 43,500 |
| | 6 | 123 | 3 | 64,000 |

TABLE 2 Continued

| Alcohol/solvent | 8% H$_2$O | | 10% H$_2$O | | 12% H$_2$O | |
|---|---|---|---|---|---|---|
| | RPM | Vis-No. 4 | RPM | Vis-No. 4 | RPM | Vis-No. 4 |
| Isopropanol/heptane | 60 | 6,500 | 30 | 16,040 | 12 | 33,900 |
| | 30 | 6,500 | 12 | 20,500 | 6 | 47,500 |
| | 12 | 9,500 | 6 | 28,400 | 3 | 70,000 |
| Methanol/xylene | 6 | 83,500 | .6 | 712,000 | | Too gelled |
| | 3 | 117,000 | .3 | 824,000 | | |
| | 1.5 | 170,000 | | | | |

*Sulfonated EPDM contained about 1 mole percent zinc sulfonate or about 30 milliequivalents sulfonate/100 gms. polymer and was dissolved at a level of 5 weight percent in 95/5 solvent/alcohol mixture.

**Claims**

1. A process of well control which comprises:—

(a) forming a solvent system of an organic liquid and a polar cosolvent, said organic liquid being an aromatic hydrocarbon, an aliphatic hydrocarbon, a chlorinated aliphatic hydrocarbon, a ketone, a cyclic aliphatic ether, an aliphatic ether, an aliphatic ester, a paraffin oil or a mixture thereof, said polar cosolvent having a solubility parameter of at least 10.0 and being a water soluble alcohol, amine, di- or tri- functional alcohol, amide, phosphate, lactone, an acetamide or a mixture thereof, said polar cosolvent being less than about 15 wt.% of said solvent system, the viscosity of said solvent system being less than about 1000 mPa · s (1,000 cps);

(b) dissolving a neutralized sulfonated polymer in said solvent system to form a solution, the concentration of said neutralized sulfonated polymer in said solution being 0.5 to 5 wt.%, the viscosity of said solution being less than 20000 mPa · s (20,000 cps), the polymer having a backbone which has a solubility parameter of less than 10.5, the polymer having a level of crystallinity of less than 25% and the sulphonated polymer having been neutralised with cations of Groups IA, IB, IIA or IIB of the Periodic Table of Elements, or lead, tin, antimony or ammonium or amine cations; and

(c) introducing the solution thus formed into a well bore, the solution being separated from the water based drilling mud by fluid spacers and thereafter allowing said solution to contact water in the drill pipe formation annulus so that there is 5 to 500 volume % water based on the volume of organic liquid plus polar cosolvent, said water being immiscible with said solution, whereby said polar cosolvent transfers from said solution to said water causing the viscosity of said solution or suspension to increase from less than 20000 mPa · s (20,000 cps) to form a gel which thereby prevents further pore fluid movement.

2. A process according to claim 1 wherein said sulphonated polymer is sulphonated EPDM terpolymer or sulphonated Butyl rubber.

3. A process according to either of the preceding claims wherein the solvent system contains 2 to 10 wt% of polar cosolvent.

4. A process according to any one of the preceding claims wherein there is more than 50 volume percent of water based on the volume of organic liquid plus polar solvent in the annulus.

## Patentansprüche

1. Verfahren zur Bohrlochkontrolle, gekennzeichnet durch:

(a) Bildung eines Lösungsmittelsystems aus einer organischen Flüssigkeit und einem polaren Colösungsmittel, wobei die organische Flüssigkeit ein aromatischer Kohlenwasserstoff, ein aliphatischer Kohlenwasserstoff, ein chlorierter aliphatischer Kohlenwasserstoff, ein Keton, ein zyklischer aliphatischer Ether, ein aliphatischer Ether, ein aliphatischer Ester, ein Paraffinöl oder eine Mischung derselben ist, das polare Colösungsmittel einen Löslichkeitsparameter von mindestens 10,0 aufweist und ein wasserlöslicher Alkohol, Amin, di- oder trifunktionaler Alkohol, Amid, Phosphat, Lacton, Acetamid oder eine Mischung derselben ist, wobei das polare Colösungsmittel weniger als etwa 15 Gew.% des Lösungsmittelsystems ausmacht und die Viskosität des Lösungsmittelsystems weniger als etwa 1000 mPa · s beträgt;

(b) Auflösen eines neutralisierten sulfonierten Polymeren in dem Lösungsmittelsystem unter Bildung einer Lösung, wobei die Konzentration des neutralisierten sulfonierten Polymeren in der Lösung 0,5—5 Gew.% beträgt, die Viskosität der Lösung geringer als 20000 mPa · s ist, das Polymer ein Gerüst aufweist, das einen Löslichkeitsparameter von weniger als 10,5 besitzt, das Polymer einen Kristallinitätsgrad von weniger als 25% besitzt und das sulfonierte Polymer mit Kationen der Gruppen IA, IB, IIA oder IIB des periodischen Systems der Elemente oder Blei-, Zinn-, Antimon- oder Ammonium- oder Aminkationen neutralisiert worden ist; und

(c) Einführung der so hergestellten Lösung in ein Bohrloch, wobei die Lösung von dem Bohrschlamm auf Wasserbasis durch Fluidtrennelemente getrennt ist, und anschließendes Kontaktierenlassen der Lösung mit dem Wasser in dem Bohrrohr-Formations-Ringraum, so daß 5 bis 500 Vol.% Wasser bezogen auf das Volumen der organischen Flüssigkeit plus polarem Colösungsmittel vorhanden sind, wobei das Wasser mit der Lösung nicht mischbar ist und das polare Colösungsmittel von der Lösung in das Wasser übergeht und bewirkt, daß die Viskosität der Lösung oder Suspension von weniger als 20000 mPa · s unter Ausbildung eines Gels ansteigt, das dadurch eine weitere Bewegung von Porenfluid verhindert.

2. Verfahren nach Anspruch 1, dadurch gekennzeichnet, daß das sulfonierte Polymer sulfoniertes EPDM-Terpolymer oder sulfonierter Butylkautschuk ist.

3. Verfahren nach einem der vorangehenden Ansprüche, dadurch gekennzeichnet, daß das Lösungsmittelsystem 2—10 Gew.% polares Colösungsmittel enthält.

4. Verfahren nach einem der vorangehenden Ansprüche, dadurch gekennzeichnet, daß im Ringraum mehr als 50 Vol.% Wasser bezogen auf das Volumen der organischen Flüssigkeit plus polarem Lösungsmittel vorhanden sind.

## Revendications

1. Procédé de régulation de puits, qui consiste

(a) à former un système solvant d'un liquide organique et d'un cosolvant polaire, ledit liquide organique étant un hydrocarbure aromatique, un hydrocarbure aliphatique, un hydrocarbure aliphatique chloré, une cétone, un éther aliphatique cyclique, un éther aliphatique, un ester aliphatique, une huile de paraffine ou l'un de leurs mélanges, ledit cosolvant polaire ayant un paramètre de solubilité d'au moins 10,0 et étant un alcool, une amine, un di- ou trialcool, un amide, un phosphate, une lactone, un acétamide solubles dans l'eau ou l'un de leurs mélanges, ledit cosolvant polaire comptant pour moins d'environ 15% en poids dudit système solvant, la viscosité dudit système solvant étant inférieure à environ 1000 mPa · s (1000 cps);

(b) à dissoudre un polymère sulfoné neutralisé dans ledit système solvant pour former une solution, la concentration dudit polymère sulfoné neutralisé dans ladite solution étant de 0,5 à 5% en poids, la viscosité de ladite solution étant inférieure à 20 000 mPa · s (20 000 cps), le polymère ayant un squelette qui présente un paramètre de solubilité inférieur à 10,5, le polymère ayant un degré de cristallinité inférieur à 25%, et le polymère sulfoné ayant été neutralisé par des cations des groupes IA, IB, IIA ou IIB du Tableau Périodique des Eléments, ou des cations plomb, étain, antimoine ou ammonium, ou amine; et

(c) à introduire la solution ainsi formée dans un puits de forage, la solution étant séparée des boues de forage, à base d'eau, par des bouchons de fluide, puis à permettre à ladite solution d'entrer en contact avec l'eau de l'anneau torique de la tige de forage, de façon que l'on ait 5 à 500 %en volume d'eau par rapport au volume du liquide organique plus le co-solvant polaire, ladit eau étant non-miscible avec ladite solution, ledit co-solvant polaire passant ainsi de ladite solution à ladite eau, en provoquant une augmentation de la viscosité de ladite solution ou suspension à partir d'une valeur inférieure à 20 000 mPa · s (20 000 cps), pour former un gel qui, de ce fait, empêche un nouveau déplacement du fluide des pores.

2. Procédé selon la revendication 1, dans lequel ledit polymère sulfoné est un terpolymère EPDM sulfoné ou un caoutchouc butyle sulfoné.

3. Procédé selon l'une ou l'autre des revendications précédentes, dans lequel le système solvant contient de 2 à 10% en poids de co-solvant polaire.

4. Procédé selon l'une quelconque des revendications précédentes, dans lequel on a plus de 50% en volume d'eau, par rapport au volume de liquide organique plus le solvant polaire dans l'anneau torique.